Europäisches Patentamt

European Patent Office

Office européen des brevets

(11) Veröffentlichungsnummer: **0 324 921**
**A2**

(12) **EUROPÄISCHE PATENTANMELDUNG**

(21) Anmeldenummer: **88119534.1**

(22) Anmeldetag: **24.11.88**

(51) Int. Cl.4: **B05C 7/02 , B05C 17/00**

(30) Priorität: **21.01.88 DE 3801668**

(43) Veröffentlichungstag der Anmeldung:
**26.07.89 Patentblatt 89/30**

(84) Benannte Vertragsstaaten:
**AT BE CH ES FR GB IT LI NL**

(71) Anmelder: **fischerwerke Artur Fischer GmbH & Co. KG**
**Weinhalde 14 - 18**
**D-7244 Waldachtal 3/Tumlingen(DE)**

(72) Erfinder: **Fischer, Artur, Prof. Dr.h.c.**
**Weinhalde 34**
**D-7244 Waldachtal 3/Tumlingen(DE)**

(74) Vertreter: **Ott, Elmar, Dipl.-Ing.**
**fischerwerke Artur Fischer GmbH & Co KG**
**Weinhalde 14-18**
**D-7244 Waldachtal 3/Tumlingen(DE)**

(54) **Behälter zum Ausspritzen eines Verbundmörtels.**

(57) Es sind Verbundanker bekannt, die in ein Bohrloch eines Mauerwerks einsetzbar sind und mittels eines einzuspritzenden Verbundmörtels mit dem Mauerwerk verbunden werden können.

Um eine möglichst einfache Spritzvorrichtung zu schaffen, wird ein Behälter mit einem Spritzkolben vorgesehen, in welchem das auszuspritzende Bindemittel angemischt werden kann. Ein Rührstab dient gleichzeitig als Dichtungselement für die Spritzdüse des Spritzkolbens, welcher seinerseits den Behälter abdichtet. Zusätzliche Dichtungselemente sind nicht erforderlich.

Fig.1

## Behälter zum Ausspritzen eines Verbundmörtels

Die Erfindung betrifft einen Behälter zum Ausspritzen eines Verbundmörtels gemäß der Gattung des Hauptanspruchs.

Aus der DE-OS 33 41 283 ist ein herkömmlicher Behälter zum Ausspritzen eines Bindemittels für die Verankerung eines Befestigungselementes in einem Bohrloch bekannt, der aus einem Behältergehäuse und einem im Behältergehäuse verschiebbaren Spritzkolben besteht. Vor dem Ausspritzen des Bindemittels muß eine das Behältergehäuse abdichtende Folie oder dergleichen geöffnet werden, damit die zweite Komponente des Bindemittels zu der im Behältergehäuse befindlichen ersten Komponente hinzugegeben werden kann. Mittels eines Rührstabes werden dann beide Komponenten vermischt. Das Bindemittel kann dann durch Einschieben des Spritzkolbens in das Behältergehäuse durch eine Spritzdüse ausgespritzt werden. Der herkömmliche Behälter benötigt zusätzliche Dichtungsmittel, damit die im Behältergehäuse befindliche Komponente des Bindemittels während der Lagerung nicht durch Feuchtigkeit oder andere Einflüsse beeinträchtigt oder unbrauchbar wird. Außerdem muß ein Rührstab oder dergleichen separat beigefügt werden, mit dem die Anmischung des Bindemittels vorgenommen werden kann.

Der Erfindung liegt die Aufgabe zugrunde, einen Behälter der eingangs genannten Gattung derart weiterzubilden, daß möglichst keine zusätzlichen Dichtungselemente erforderlich sind und der erforderliche Rührstab problemlos beigefügt sein kann.

Die Lösung dieser Aufgabe wird bei einem Behälter der eingangs genannten Gattung durch die im kennzeichnenden Teil des Hauptanspruchs angegebenen Merkmale erhalten. Der Spritzkolben schließt die Behälteröffnung oberhalb der im Behältergehäuse befindlichen ersten Komponente ab. Die Spritzdüse, die am Spritzkolben absteht, wird durch einen als Spritzdüsenabdichtung ausgebildeten Stab abdichtet. Dieser Stab kann nach dem Herausziehen aus der Spritzdüse als Rührstab verwendet werden. Somit bildet der Spritzkolben zusammen mit der stabförmigen Spritzdüsenabdichtung eine Abdichtung für die Behälteröffnung. Zusätzliche Dichtungselemente sind nicht mehr erforderlich.

Vorzugsweise wird der Stab länger als die Höhe des Behälters mit Spritzkolben ausgebildet, damit er in jedem Fall an der Spritzdüse so weit heraussteht, daß er noch sicher von Hand herausgezogen werden kann.

Besonders vorteilhaft ist es, den Kolben mit einer in Richtung Spritzdüse offenen napfförmigen Vertiefung zu versehen, deren Füllvolumen für die andere Komponente dem Mischungsverhältnis bzw. einem ganzzahligen Teil des Mischungsverhältnisses bezüglich der Füllmenge der im Behältergehäuse enthaltenen Komponente entspricht. Die napfförmige Vertiefung kann somit als Meßbecher für die zweite Komponente dienen, der je nach Bindemittel einmal oder mehrfach mit der zweiten Komponente gefüllt wird, um diese dann der ersten Komponente des Bindemittels in der erforderlichen Menge beimischen zu können.

Die Erfindung wird anhand eines in der Zeichnung dargestellten Ausführungsbeispiels näher erläutert.

Es zeigen:

Figur 1 das mit einer Komponente gefüllte und mittels des Spritzkolbens verschlossene Behältergehäuse,

Figur 2 das in eine Bohrung im Mauerwerk eingesetzte Befestigungselement beim Ausspritzen unter Verwendung des Behälters gemäß Figur 1.

Das vorzugsweise aus Kunststoff bestehende Behältergehäuse 1 ist als napfförmiger Hohlzylinder mit Boden 2 ausgebildet. Eine im Behältergehäuse 1 befindliche erste Komponente 3 eines Bindemittels wird durch einen Spritzkolben 4 an der Behälteröffnung 5 dicht abgeschlossen. Eine am Spritzkolben 4 abstehende Spritzdüse 6 ist dabei von einem in die Spritzdüse 6 eingeschobenen Stab 7 dicht verschlossen. Der Stab 7 besitzt eine größere Länge als der Behälter mit aufgesetzter Spritzdüse 6, wodurch verhindert wird, daß der Stab 7 versehentlich vollständig in die Spritzdüse 6 eingeschoben wird.

An der Spritzdüse 6 ist ein als Anschlag dienender Flansch 8 vorgesehen. Der Stab 7 ragt an der Spritzdüse 6 mit seinem Ende 9 so weit heraus, daß er bequem von Hand aus der Spritzdüse 6 herausziehbar ist.

Der Spritzkolben 4 besitzt eine napfförmige Vertiefung 10, die als Meßbecher zum Anmischen des Bindemittels dient. In der Vertiefung 10 können die erforderlichen Mengen der zweiten Komponente abgemessen werden, die zur ersten Komponente 3 hinzuzufügen ist. Zu diesem Zweck wird der Spritzkolben 4 abgenommen und der Stab 7 zum Anmischen des Bindemittels als Rührstab verwendet.

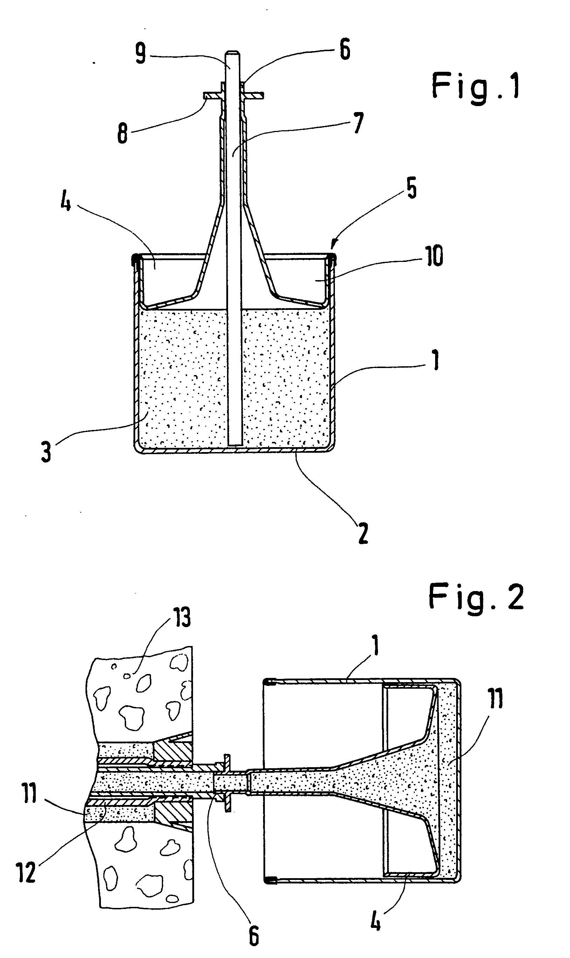

Nach dem Anmischen des Bindemittels 11 kann dieses wie in Figur 2 dargestellt durch Eindrücken des Spritzkolbens 4 aus der Spritzdüse 6 in ein Befestigungselement 12 eingespritzt werden. Nach dem Aushärten des Bindemittels 11, welches ein Verbundmörtel sein kann, entsteht eine hochfeste Verbindung zwischen Befestigungselement 12 und der Wand 13, in welche das Befestigungselement 12 eingesetzt ist.

Der in Figur 1 dargestellte Stab 7 dichtet die Spritzdüse 6 ab und verhindert dabei gleichzeitig ein Verkleben oder Zusetzen der Spritzdüse 6.

Der in Figur 1 dargestellte Behälter kann für die Lagerung und den Vertrieb in einer Verpackung aufbewahrt werden, deren innere Höhe der Höhe des Behälters mit dem überstehenden Stab 7 entspricht. Der Stab 7 wird auf diese Weise sicher in der Position gehalten, wie sie in Figur 1 gezeigt ist.

Das Behältergehäuse 1, der Spritzkolben 4 und der Stab 7 sind zylindrische Teile, die vorzugsweise aus Kunststoff gefertigt sind.

## Ansprüche

1. Behälter zum Ausspritzen eines Verbundmörtels, eines Klebers oder eines entsprechenden Bindemittels für die Verankerung eines Befestigungselements in einem Bohrloch, bestehend aus dem eine Komponente des Bindemittels enthaltenden Behältergehäuse und einem im Behältergehäuse verschiebbaren Spritzkolben mit Spritzdüse, **dadurch gekennzeichnet**, daß der Spritzkolben (4) die Behälteröffnung abschließt und in die Spritzdüse (6) ein herausnehmbarer Stab (7) als Spritzdüsenabdichtung eingesetzt ist.

2. Behälter nach Anspruch 1, **dadurch gekennzeichnet**, daß der Stab (7) länger als die Höhe des Behälters mit Spritzkolben ist.

3. Behälter nach einem der Ansprüche 1 oder 2, **dadurch gekennzeichnet**, daß der Stab (7) ein Rührelement zum Anrühren des Bindemittels (11) darstellt.

4. Behälter nach einem der vorhergehenden Ansprüche, **dadurch gekennzeichnet**, daß der Spritzkolben (4) eine in Richtung Spritzdüse (6) offene napfförmige Vertiefung (10) aufweist, deren Füllvolumen für die andere Komponente dem Mischungsverhältnis bzw. einem ganzzahligen Teil des Mischungsverhältnisses bezüglich der Füllmenge der im Behältergehäuse enthaltenen Komponente (3) entspricht.

EP 0 324 921 A2

Fig.1

Fig.2